# EUROPEAN PATENT SPECIFICATION

(11) **EP 3 595 838 B1**
(45) Date of publication and mention of the grant of the patent: **12.05.2021**
(21) Application number: 18716662.4
(22) Date of filing: 13.03.2018
(51) Int. Cl.: B23D 61/18, B23D 65/00, B28D 1/12

(54) **PRODUCTION METHOD OF A DIAMOND WIRE AND DIAMOND WIRE FOR CUTTING STONE-LIKE MATERIAL**
HERSTELLUNGSVERFAHREN FÜR DIAMANTDRAHT UND DIAMANTDRAHT ZUM SCHNEIDEN VON STEINARTIGEM MATERIAL
MÉTHODE DE PRODUCTION D'UN FIL DIAMANTÉ ET FIL DIAMANTÉ POUR LA COUPE DE MATÉRIAUX PIERREUX OU SIMAILAIRES

(30) Priority: 13.03.2017 IT 201700027619
(43) Date of publication of application: 22.01.2020
(73) Proprietor: Boart & Wire S.r.l., 36030 Fara Vicentino (VI) (IT)
(72) Inventor: RUARO, Carlo, 36030 Fara Vicentino (IT); LIEVORE, Eddy, 36030 Fara Vicentino (IT)
(74) Representative: Bellemo, Matteo
(86) International application number: PCT/IB2018/051663
(87) International publication number: WO 2018/167665

(56) References cited:
- WO-A1-2015/028950
- WO-A1-2016/120758
- WO-A1-2016/188978
- US-A- 3 754 845

## Description

### TECHNICAL FIELD

The present invention relates to a production method of a diamond wire for cutting stone-like material, according to the preamble of claim 1 and to a diamond wire for cutting stone-like material, according to the preamble of claim 10.

### BACKGROUND ART

Such a method and such a wire are known from WO 2016/120758 A1.

As is known, most of the diamond wires for cutting stone-like material currently on the market are basically made up of a multi-strand metal cable arranged in a closed loop; of a series of substantially cylindrical, tubular-shaped diamond beads fitted onto the metal cable at a given and constant distance one from the other; and of an outer tubular sheath made of thermoplastic material, which completely encases/covers the metal cable interposing itself between the metal cable and the single diamond beads, so as to prevent direct contact between the diamond beads and the metal cable and, at the same time, firmly block the single diamond beads on the metal cable.

Currently the production of the diamond wire provides, in sequence, the steps of: threading the diamond beads on the metal cable; joining the two ends of the metal cable so as to form a closed loop; distributing the diamond beads in a regular manner on the metal cable; and finally forming the outer sheath directly over the metal cable via injection moulding, so as to block the single diamond beads on the metal cable.

The joining of the two ends of the multi-strand metal cable is usually made by properly intertwining the single strands that contribute in forming the multi-strand metal cable. The most used technique is that of splicing.

Regardless of the joining technique used, at the end of the operation the two ends of each strand will be on the outer surface of the metal cable, one facing and closely adjacent to the other.

Obviously, the discontinuity points of the single strands, i.e. the areas of the metal cable where the two ends of each strand reciprocally butt, are conveniently spaced along the metal cable so as not to locally weaken the metal cable.

In addition, before distributing and blocking the diamond beads on the metal cable, the areas of the metal cable where the two ends of each strand reciprocally butt are covered by tubular sleeves adapted to prevent, during use, the two ends of the strand from detaching/rising from the surface of the metal cable, thus compromising the structural integrity of the diamond wire.

Considering that the diamond wires currently on the market normally use metal cables with at least 7 strands, the positioning of the protective sleeves on the metal cable significantly affects the assembly time and costs of the diamond wire.

In patent application WO202/142633A1 the areas of the metal cable where the ends of the strands reciprocally butt are covered by tubes made of heat-shrinkable material.

Despite being quite fast to put in place, unfortunately the sleeves made of heat-shrinkable material have a very limited containment capacity so that, in the long run, the multi-strand metal cable tends to unravel, thus compromising the structural integrity of the diamond wire.

### DISCLOSURE OF INVENTION

Aim of the present invention is to provide a diamond wire for cutting stone-like material, which is free from the drawbacks highlighted above and also provides, for the same size, a greater mechanical resistance to traction and bending.

In compliance with the above aims, according to the present invention there is provided a production method of a diamond wire for cutting stone-like material as defined in Claim 1 and preferably, though not necessarily, in any one of the claims depending thereon.

According to the present invention, there is also provided a diamond wire for cutting stone-like material as defined in Claim 10 and preferably, though not necessarily, in any one of the claims depending thereon.

### BRIEF DESCRIPTION OF THE DRAWINGS

The present invention will now be described with reference to the appended drawings, which illustrate an example of a nonlimiting embodiment, wherein:
- Figure 1 is a side view of a diamond-wire for cutting stone-like material realized according to the teachings of the present invention;
- Figure 2 is an enlarged view of a stretch of the diamond wire shown in Figure 1, with parts in section and parts removed for clarity; whereas
- Figures from 3 to 8 schematically depict as many steps of the production method of the diamond wire shown in Figure 1.

### BEST MODE FOR CARRYING OUT THE INVENTION

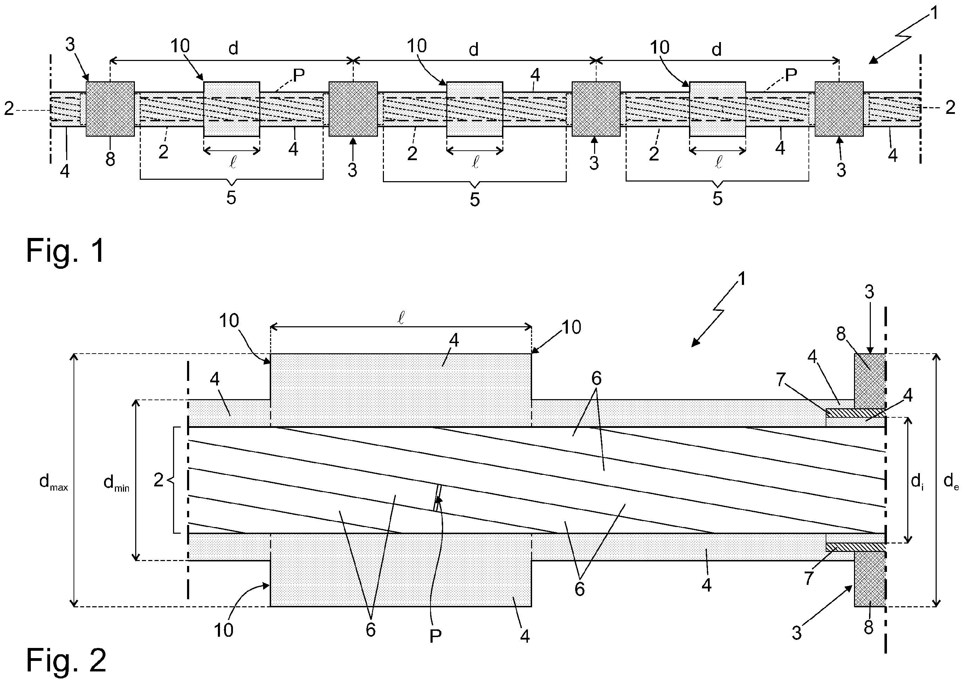

With reference to Figures 1 and 2, number 1 denotes as a whole a diamond wire for cutting stone-like material, which can be advantageously used for cutting marble and granite.

The diamond wire 1 comprises: a central supporting cable 2 preferably made of metal material, which has a multi-strand structure and is arranged in a closed loop; a series of substantially cylindrical, tubular-shaped abrasive beads 3 which are fitted onto the supporting cable 2 spaced one after the other, and are externally made of an abrasive material capable of carving/cutting the stone-like material; and an outer tubular sheath 4 made of plastic material, preferably of a thermoplastic type, which is made by injection moulding directly over the supporting cable 2, and completely encases/covers the supporting cable 2 additionally interposing itself between the supporting cable 2 and the single abrasive beads 3, so as to block the abrasive beads 3 in a rigid manner on the supporting cable 2.

In other words, the tubular sheath 4 has a minimum outer diameter dₘᵢₙ greater than the nominal diameter of the supporting cable 2, and covers and protects the supporting cable 2 substantially along its entire length.

The abrasive beads 3, on the other hand, delimit/define, in pairs along the supporting cable 2, a series of uncovered longitudinal stretches 5 each of which is preferably coated only by the tubular sheath 4.

More in detail, with reference to Figures 1 and 2, the supporting cable 2 comprises a series of strands 6 that are preferably made of metal material and are helically wound one on the other, and is arranged in a closed loop by appropriately intertwining the strands 6. The supporting cable 2 therefore has a series of discontinuity points P where the two ends of each strand 6 of the supporting cable 2 are separately located/butt.

With reference to Figure 1, at least one and preferably all discontinuity points P of the supporting cable 2 are moreover arranged along as many uncovered longitudinal stretches 5 of the supporting cable 2, spaced from the two abrasive beads 3 which delimit the uncovered longitudinal stretch 5.

Preferably the uncovered longitudinal stretches 5 of supporting cable 2 accommodating the discontinuity points P are moreover not consecutive.

In the example shown, in particular, the discontinuity points P of supporting cable 2 are preferably arranged substantially at the centre of the respective uncovered longitudinal stretches 5 of the supporting cable 2.

With particular reference to Figure 2, the abrasive beads 3, in turn, have an inner diameter di slightly greater than the diameter of the supporting cable 2, and are maintained locally coaxial and rigidly integral to the supporting cable 2 by the outer sheath 4 filling the space/gap between the two components.

In the example shown, in particular, the supporting cable 2 is preferably made of steel, and is preferably formed by 7 or more strands 6 suitably wound and interweaved one with the other.

Preferably, the two ends of supporting cable 2 are moreover joined together by intertwining the strands 6 with the splicing technique.

In addition, the supporting cable 2 has a nominal diameter preferably less than 8 mm (millimetres) and preferably, though not necessarily, ranging between 1 and 5 mm (millimetres).

Preferably, the difference between the nominal diameter of supporting cable 2 and the inner diameter di of the abrasive beads 3 furthermore ranges between 0,1 and 0,5 mm (millimetres).

With reference to Figure 1, in addition, the abrasive beads 3 are preferably distributed on supporting cable 2 with a substantially constant spacing/pitch which is preferably also greater than or equal to 2,5 cm (centimetres). In other words, the distance d between two adjacent/consecutive abrasive beads 3 is preferably always substantially constant and greater than or equal to 2,5 cm (centimetres).

The abrasive beads 3, therefore, subdivide the supporting cable 2 into a series of uncovered longitudinal stretches 5, all of them preferably substantially of equal length.

Preferably, each abrasive bead 3 moreover comprises: a preferably substantially cylindrical-shaped, supporting tubular sleeve 7 which is preferably made of metal material and is fitted directly onto the tubular sheath 4, locally coaxial with the longitudinal axis of the supporting cable 2; and a substantially cylindrical tubular-shaped, bushing 8 which is made of abrasive material and is fitted/fixed in unmovable manner directly onto the sleeve 7.

Preferably, the bushing 8 additionally has an axial length shorter than the axial length of the supporting sleeve 7, and is preferably arranged substantially in the middle of the sleeve 7.

Preferably, the outer diameter of sleeve 7 is additionally smaller than the minimum outer diameter dₘᵢₙ of tubular sheath 4, so that the sleeve 7 can be entirely embedded into the tubular sheath 4.

In the example shown, in particular, the axial length of sleeve 7 is preferably lower than 1,2 cm (centimetres). Furthermore, the difference between the inner diameter di of supporting sleeve 7 and the nominal diameter of supporting cable 2 preferably ranges between 0,1 and 0,2 mm (millimetres).

The supporting sleeve 7, moreover, is preferably made of steel or bronze, and is preferably also provided with an internal thread adapted to dig/sink into the tubular sheath 4 to increase the grip of the abrasive bead 3 on the tubular sheath 4.

The bushing 8, in turn, is preferably made of an abrasive material comprising diamond grains.

More in detail, the bushing 8 is preferably made of a sintered composite material incorporating grains of synthetic diamond, and is fixed in unmovable manner on the supporting sleeve 7 preferably by means of brazing.

In other words, the abrasive beads 3 are externally coated in sintered diamond.

With reference to Figures 1 and 2, the tubular sheath 4, on the other hand, is preferably made of a thermoplastic polymer.

More in detail, the tubular sheath 4 is preferably made of thermoplastic polyurethane (TPU) or other similar polymeric material.

In addition, according to the invention, the tubular sheath 4 has, along one or more of the uncovered longitudinal stretches 5 accommodating a discontinuity point P of supporting cable 2, a respective enlarged sheath segment 10 having a given axial length ℓ and which extends astride the discontinuity point P and is furthermore spaced/distanced from the two abrasive beads 3 delimiting the same uncovered longitudinal stretch 5. The enlarged sheath segments 10 of tubular sheath 4 therefore extend over the areas where the discontinuity points P of supporting cable 2 are located, and are made by injection moulding directly over the supporting cable 2, simultaneously and together with the rest of tubular sheath 4. More in detail, the tubular sheath 4 preferably has a respective enlarged segment 10 along each of the uncovered longitudinal stretches 5 accommodating a discontinuity point P of supporting cable 2.

The enlarged segment 10, in addition, is preferably substantially cylindrical in shape, and has an axial length ℓ smaller than the axial length of the corresponding uncovered longitudinal stretch 5.

Preferably, the enlarged segment 10 of tubular sheath 4 is moreover substantially equidistant from the two abrasive beads 3 located at the two ends of the uncovered longitudinal stretch 5. In addition, the discontinuity point P of supporting cable 2 is preferably arranged substantially in the middle of the enlarged segment 10.

With reference to Figure 2, each enlarged segment 10 of tubular sheath 4, in particular, has an axial length ℓ preferably smaller than 2 cm (centimetres), and/or a maximum outer diameter dₘₐₓ preferably smaller than or equal to the outer diameter de of the immediately adjacent abrasive beads 3.

More in detail, the axial length ℓ of the enlarged segment 10 is preferably greater than 50% of the value of the nominal diameter of supporting cable 2, and is preferably even lower than 5 times the value of the nominal diameter of the supporting cable 2.

In the example shown, in particular, each enlarged segment 10 has an axial length ℓ preferably ranging between 1,2 and 2 times the value of the nominal diameter of supporting cable 2, and preferably also less than 1 cm (centimetre).

In addition, the maximum outer diameter dₘₐₓ of the enlarged segment 10 is preferably at least 50% greater than the minimum outer diameter dₘᵢₙ of tubular sheath 4.

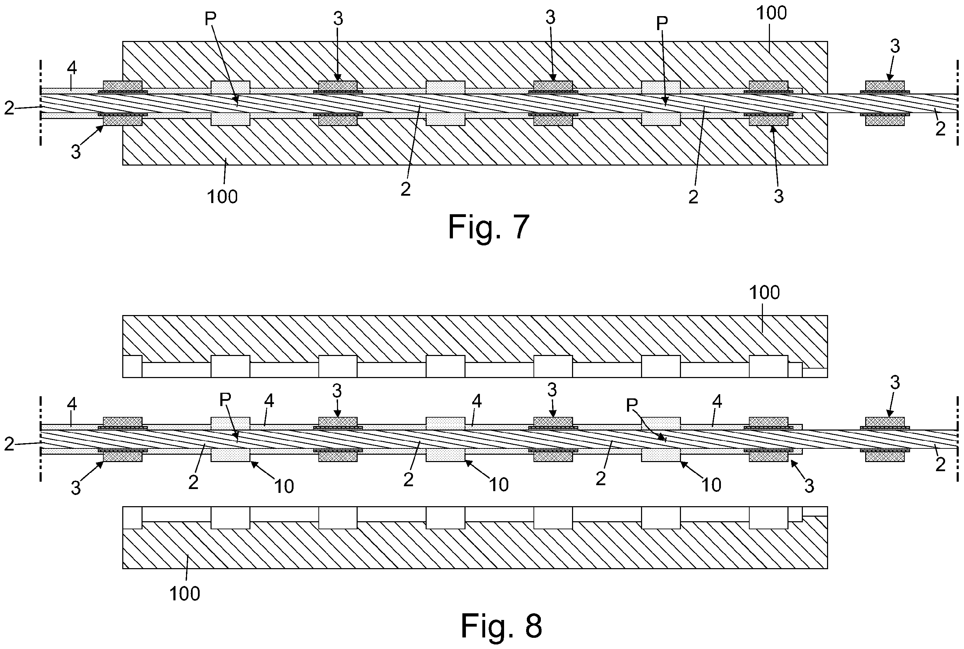

With reference to Figures 1, 2 and 8, preferably the tubular sheath 4 finally has an enlarged segment 10 along each uncovered longitudinal stretch 5 of supporting cable 2, regardless of whether said uncovered longitudinal stretch 5 accommodates or not a discontinuity point P of supporting cable 2, so that all the abrasive beads 3 are flanked, on both sides, by an enlarged segment 10.

In other words, the enlarged segments 10 of tubular sheath 4 are preferably intercalated/interposed between the abrasive beads 3, preferably in without interruption along the entire length of supporting cable 2.

Operation of the diamond wire 1 is easily inferable from the above and therefore does not require further explanations.

With reference to Figures from 3 to 8, the production method of the diamond wire 1 basically comprises the steps of:
- threading a predetermined number of abrasive beads 3 on the supporting cable 2;
- joining the two ends 2a of the supporting cable 2 by suitably intertwining the strands 6 that form the supporting cable 2, so as to form a closed loop;
- distributing the diamond beads 3 on the supporting cable 2 so that at least a part of the abrasive beads 3 delimit, in pairs on a corresponding portion of the supporting cable 2, a series of uncovered longitudinal stretches 5, and so that at least one of the discontinuity points P of supporting cable 2 is arranged along one of said uncovered longitudinal stretches 5 of supporting cable 2, spaced from the two abrasive beads 3 delimiting the same uncovered longitudinal stretch 5; and
- injection moulding the outer tubular sheath 4 of plastic material directly over said portion of supporting cable 2, so as to completely cover the same portion of supporting cable 2 and, at the same time, also form, at least along each uncovered longitudinal stretch 5 accommodating a respective discontinuity point P of supporting cable 2, a respective enlarged segment 10 extending astride the discontinuity point P and which is spaced/ distanced from the two abrasive beads 3 located at the two ends of the same uncovered longitudinal stretch 5.

Preferably, before distributing the abrasive beads 3 on the supporting cable 2, the production method of diamond wire 1 additionally also comprises the step of tensioning the portion of supporting cable 2 where the outer tubular sheath 4 is to be injection-moulded.

Preferably, though not necessarily, the joining of the two ends of supporting cable 2 additionally takes place with the splicing technique. Alternatively, it is also possible to use the closed loop technique.

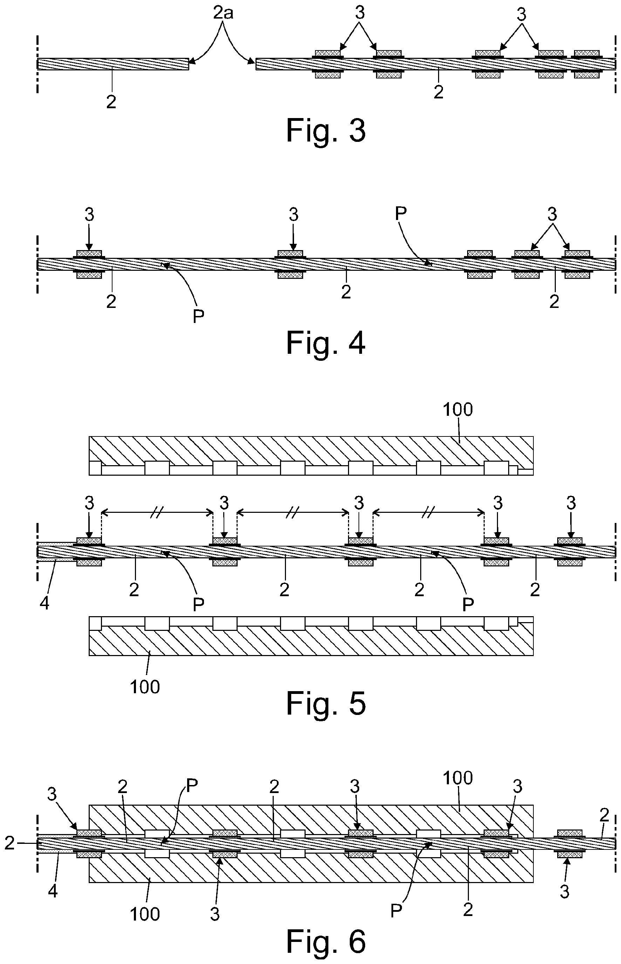

With reference to Figure 5, preferably the production method of diamond wire 1 moreover provides for distributing the abrasive beads 3 on the portion of supporting cable 2 at a substantially constant distance one from the other.

In addition, the enlarged segment or segments 10 of tubular sheath 4 is/are preferably made via injection moulding directly over the supporting cable 2, so as to be substantially equidistant from the two abrasive beads 3 located at the two ends of the corresponding uncovered longitudinal stretch 5.

Preferably, the diamond beads 3 are moreover distributed on the portion of supporting cable 2, so that the discontinuity point or points P of supporting cable 2 is/are arranged substantially at the centre of the respective uncovered longitudinal stretches 5 of supporting cable 2.

In addition, during the injection moulding of the outer tubular sheath 4, an enlarged segment 10 is preferably made along each uncovered longitudinal stretch 5 of supporting cable 2, regardless of whether the uncovered longitudinal stretch 5 accommodates or not a discontinuity point P of supporting cable 2, so that all the abrasive beads 3 are flanked, on both sides, by an enlarged segment 10.

More in detail, with particular reference to Figures 5, 6, 7 and 8, the production method of diamond wire 1 preferably comprises, in sequence, the steps of:
- tensioning a portion of the supporting cable 2 of given length and such as to support a plurality of diamond beads 3 (for example a segment of 50 cm in length), so as to make it substantially straight;
- distributing the abrasive beads 3 on said portion of the supporting cable 2 according to the predetermined spacing with reference to the discontinuity points P possibly present on said portion of the supporting cable 2;
- inserting the portion of supporting cable 2 together with the diamond beads 3, inside a mould for injection-moulding 100 which is provided with a straight through cavity that copies in negative the shape of a corresponding segment of the diamond wire 1 to be made;
- injecting the plastic material inside the through cavity of the mould 100, so that the plastic material can completely fill the empty space inside the through cavity, including the gaps between the supporting cable 2 and the single abrasive beads 3, thus forming the outer tubular sheath 4 of diamond wire 1 with its enlarged segment/s 10; and finally
- extracting the resulting segment of diamond wire 1 from the mould 100.

Preferably, the plastic material injected into the mould 100 is moreover a thermoplastic polymer.

More in detail, the plastic material injected into the mould 100 is preferably a thermoplastic polyurethane (TPU) or other similar polymeric material.

The production method of diamond wire 1 described above offers several advantages.

Experimental tests have shown that the injection-moulding of the tubular sheath 4 directly over the supporting cable 2 at the discontinuity points P, allows the polymeric material forming the enlarged segment 10 to deeply penetrate between the strands 6 before solidifying. This localized addition of plastic material prevents the two ends of the strand 6 from rising during use of the diamond wire 1, practically bringing to zero the risks of premature unravelling of the metal cable 2.

Furthermore, the addition of plastic material in the neighbourhood of the discontinuity points P significantly increases the tensile strength and fatigue resistance of the diamond wire 1.

Thanks to the presence of the enlarged segments 10, in fact, the diamond wire 1 has a tensile strength and a fatigue resistance at least 75% greater than those of a diamond wire of the same size and in which the discontinuity points on the multi-strand metal cable are simply covered by protective sleeves or tubes fitted onto the metal cable, astride the discontinuity points.

In addition, the presence of the enlarged segments 10 at the centre of the various uncovered longitudinal stretches 5 of the supporting cable 2 allows the diamond wire 1 to more precisely copy the profile of the groove of the return pulley, thus uniforming the bending radius of the diamond wire 1 along the entire resting area on the pulley, with all advantages that this entails.

A homogeneous bending radius along the entire resting surface on the pulley, in fact, reduces the mechanical stresses on the supporting cable 2 thus increasing the average life.

It is finally clear that modifications and variants can be made to the production method described above without however departing from the scope of the present invention as defined by the claims.

For example, in a different embodiment, the tubular sheath 4 may have, along each uncovered longitudinal stretch 5, two or more enlarged segments 10 having a fixed axial length ℓ and which are spaced one after the other and from the two abrasive beads 3 delimiting the same uncovered longitudinal stretch 5.

## Claims

1. A production method of a diamond wire (1) for cutting stone-like material wherein the diamond wire (1) comprises: a supporting cable (2) having a multi-strand structure; a series of abrasive beads (3) fitted on said supporting cable (2) spaced one after the other; and an outer tubular sheath (4) made of plastic material, which substantially completely covers the supporting cable (2) and firmly locks the single abrasive beads (3) onto the supporting cable (2);
the production method comprising the steps of:
- threading a predetermined number of abrasive beads (3) on the supporting cable (2);
- joining the two ends (2a) of the supporting cable (2) by suitably interweaving the strands (6) forming the supporting cable (2), so as to form a closed loop and
- distributing the diamond beads (3) on the supporting cable (2) so that at least a part of the abrasive beads (3) delimit, in pairs on a corresponding portion of the supporting cable (2), a series of uncovered longitudinal stretches (5), and so that at least one of the discontinuity points (P) of the supporting cable (2) is arranged along one of said uncovered longitudinal stretches (5) of the supporting cable (2), spaced from the two abrasive beads (3) that delimit the same uncovered longitudinal stretch (5); **characterized by**
- injection moulding the outer tubular sheath (4) made of plastic material directly over said portion of the supporting cable (2), so as to cover the same portion of the supporting cable (2) and also form, at least along each uncovered longitudinal stretch (5) that accommodates a respective discontinuity point (P) of the supporting cable (2), a respective enlarged sheath segment (10) having a given axial length (ℓ) and which extends astride the discontinuity point (P) and is spaced/distanced from the two abrasive beads (3) located at the two ends of the same uncovered longitudinal stretch (5).

2. Production method according to Claim 1, **characterized in that** said enlarged sheath segment (10) is substantially equidistant from the two abrasive beads (3) located at the two ends of the uncovered longitudinal stretch (5) accommodating the discontinuity point (P) of the supporting cable (2).

3. Production method according to Claim 1 or 2, **characterized in that** the enlarged sheath segment (10) is substantially cylindrical in shape.

4. Production method according to Claim 3, **characterized in that** the enlarged sheath segment (10) has a maximum outer diameter (dₘₐₓ) smaller than or equal to the outer diameter (dₑ) of the immediately adjacent abrasive beads (3).

5. Production method according to any one of the preceding claims, **characterized in that** the enlarged sheath segment (10) has an axial length (ℓ) greater than 50% of the value of the diameter of the supporting cable (2), and/or 5 times lesser than the value of the diameter of the supporting cable (2).

6. Production method according to any one of the preceding claims, **characterized in that** the abrasive beads (3) are arranged on said portion of the supporting cable (2) at a substantially constant distance one from the other.

7. Production method according to any one of the preceding claims, **characterized in that** it comprises, prior to the step of distributing the diamond beads (3) on the supporting cable (2), also the step of tensioning the portion of the supporting cable (2) where the outer tubular sheath (4) is to be injection moulded.

8. Production method according to any one of the preceding claims, **characterized by** forming, during the injection moulding of the outer tubular sheath (4), an enlarged sheath segment (10) along each uncovered longitudinal stretch (5) of the supporting cable (2), so that all the abrasive beads (3) are flanked on both sides by an enlarged sheath segment (10).

9. Production method according to any one of the preceding claims, **characterized in that** the outer tubular sheath (4) is made of a thermoplastic polymer.

10. A diamond wire (1) for cutting stone-like material and comprising: a supporting cable (2) arranged in a closed loop; a series of abrasive beads (3) which are fitted on the supporting cable (2) spaced one after the other; and an outer tubular sheath (4) made of plastic material, which is formed by injection moulding directly over the supporting cable (2) so as to cover the supporting cable (2) and interpose between the supporting cable (2) and the single abrasive beads (3) to firmly lock the abrasive beads (3) onto the supporting cable (2);
the supporting cable (2) comprising a plurality of strands (6), and being closed in a loop by interweaving said strands (6) so as to form a series of discontinuity points (P) where the two ends of each strand (6) are arranged/butt; wherein the abrasive beads (3) delimit, in pairs along the supporting cable (2), a series of uncovered longitudinal stretches (5); and at least one of the discontinuity points (P) of the supporting cable (2) is arranged along one of said uncovered longitudinal stretches (5), spaced from the two abrasive beads (3) delimiting the same uncovered longitudinal stretch (5); the diamond wire (1) being **characterized in that** the outer tubular sheath (4) has, along the uncovered longitudinal stretch (5) that accommodates said discontinuity point (P), an enlarged sheath
segment (10) having a fixed axial length (ℓ) and which extends astride the same discontinuity point (P) and is furthermore spaced/distanced from the two abrasive beads (3) delimiting the uncovered longitudinal stretch (5).

11. Diamond wire according to Claim 10, **characterized in that** all discontinuity points (P) of the supporting cable (2) are arranged along as many uncovered longitudinal stretches (5) of the supporting cable (2), spaced from the two abrasive beads (3) delimiting the corresponding uncovered longitudinal stretch (5); and **in that** the outer tubular sheath (4) has, along each uncovered longitudinal stretch (5) accommodating a discontinuity point (P) of the supporting cable (2), a respective enlarged segment (10) which extends astride of the discontinuity point (P) and is moreover spaced/distanced from the two abrasive beads (3) delimiting the same uncovered longitudinal stretch (5).

12. Diamond wire according to Claim 10 or 11, **characterized in that** the enlarged segment (10) is substantially equidistant from the two abrasive beads (3) that are located at the two ends of the uncovered longitudinal stretch (5) accommodating the discontinuity point (P) of the supporting cable (2).

13. Diamond wire according to Claim 10, 11 or 12, **characterized in that** the enlarged segment (10) is substantially cylindrical in shape.

14. Diamond wire according to Claim 13, **characterized in that** the enlarged segment (10) has a maximum outer diameter (dₘₐₓ) smaller than or equal to the outer diameter (dₑ) of the immediately adjacent abrasive beads (3).

15. Diamond wire according to any one of Claims from 10 to 14, **characterized in that** the enlarged segment (10) has an axial length (ℓ) greater than 50% of the value of the diameter of the supporting cable (2), and/or lesser than 5 times the value of the diameter of the supporting cable (2).

16. Diamond wire according to any one of claims from 10 to 15, **characterized in that** the outer tubular sheath (4) has an enlarged segment (10) along each uncovered longitudinal stretch (5) of the supporting cable (2), so that that all the abrasive beads (3) are flanked, on both sides, by an enlarged segment (10) .

## Patentansprüche

1. Herstellungsverfahren eines Diamantdrahts (1) zum Schneiden von steinartigem Material, wobei der Diamantdraht (1) aufweist: ein Tragseil (2) mit einer mehrstrangigen Struktur; eine Reihe von Schleifperlen (3), die auf dem Tragseil (2) in Abständen hintereinander angebracht sind; und einen äußeren rohförmigen Mantel (4) aus Kunststoffmaterial, der das Tragseil (2) im Wesentlichen vollständig bedeckt und die einzelnen Schleifperlen (3) fest auf dem Tragseil (2) befestigt;
wobei das Herstellungsverfahren die folgenden Schritte umfasst:
- Einfädeln einer vorbestimmten Anzahl von Schleifperlen (3) auf das Tragseil (2);
- Verbinden der zwei Enden (2a) des Tragseils (2) durch geeignetes Verflechten der Stränge (6), die das Tragseil (2) bilden, um eine geschlossene Schleife zu bilden, und
- Verteilen der Diamantperlen (3) auf dem Tragseil (2), so dass zumindest ein Teil der Schleifperlen (3) paarweise auf einem entsprechenden Abschnitt des Tragseils (2) eine Reihe von freigelegten Längsausdehnungen (5) begrenzen, und dass zumindest einer der Diskontinuitätspunkte (P) des Tragseils (2) entlang einer der freigelegten Längsausdehnungen (5) des Tragseils (2) angeordnet ist, und zwar beabstandet von den zwei Schleifperlen (3), welche die gleiche freigelegte Längsausdehnung (5) begrenzen; **gekennzeichnet durch**:
- Spritzgießen des äußeren rohrförmigen Mantels (4) aus Kunststoffmaterial unmittelbar über dem Abschnitt des Tragseils (2), um den gleichen Abschnitt des Tragseils (2) zu bedecken und zudem zumindest entlang jeder freigelegten Längsausdehnung (5), die einen entsprechenden Diskontinuitätspunkt (P) des Tragseils (2) aufnimmt, ein entsprechend vergrößertes Mantelsegment (10) zu bilden, das eine gegebene axiale Länge (ℓ) aufweist und sich über den Diskontinuitätspunkts (P) erstreckt und von den zwei Schleifperlen (3) beabstandet/distanziert ist, die sich an den zwei Enden der gleichen freigelegten Längsausdehnung (5) befinden.

2. Herstellungsverfahren nach Anspruch 1, **dadurch gekennzeichnet, dass** das vergrößerte Mantelsegment (10) im Wesentlichen äquidistant zu den zwei Schleifperlen (3) ist, die sich an den zwei Enden der freigelegten Längsausdehnung (5) befinden, die den Diskontinuitätspunkt (P) des Tragseils (2) aufnimmt.

3. Herstellungsverfahren nach Anspruch 1 oder 2, **dadurch gekennzeichnet, dass** das vergrößerte Mantelsegment (10) im Wesentlichen zylinderförmig ist.

4. Herstellungsverfahren nach Anspruch 3, **dadurch gekennzeichnet, dass** das vergrößerte Mantelsegment (10) einen maximalen Außendurchmesser (dₘₐₓ) aufweist, der kleiner als der oder gleich dem Außendurchmesser (dₑ) der unmittelbar benachbarten Schleifperlen (3) ist.

5. Herstellungsverfahren nach einem der vorstehenden Ansprüche, **dadurch gekennzeichnet, dass** das vergrößerte Mantelsegment (10) eine axiale Länge (ℓ) aufweist, die größer als 50 % des Werts des Durchmessers des Tragseils (2) ist und/oder 5-mal kleiner als der Wert des Durchmessers des Tragseils (2) ist.

6. Herstellungsverfahren nach einem der vorstehenden Ansprüche, **dadurch gekennzeichnet, dass** die Schleifperlen (3) auf dem Abschnitt des Tragseils (2) in einem im Wesentlichen konstanten Abstand voneinander angeordnet sind.

7. Herstellungsverfahren nach einem der vorstehenden Ansprüche, **dadurch gekennzeichnet, dass** das Verfahren vor dem Schritt des Verteilens der Diamantperlen (3) auf dem Tragseil (2) ferner den Schritt des Spannens des Abschnitts des Tragseils (2) umfasst, an dem der äußere rohrförmige Mantel (4) spritzgegossen wird.

8. Herstellungsverfahren nach einem der vorstehenden Ansprüche, **gekennzeichnet durch** das Formen, während des Spritzgießens des äußeren rohrförmigen Mantels (4), eines vergrößerten Mantelsegments (10) entlang jeder freigelegten Längsausdehnung (5) des Tragseils (2), so dass sämtliche Schleifperlen (3) auf beiden Seiten durch ein vergrößertes Mantelsegment (10) flankiert sind.

9. Herstellungsverfahren nach einem der vorstehenden Ansprüche, **dadurch gekennzeichnet, dass** der äußere rohrförmige Mantel (4) aus thermoplastischem Polymer besteht.

10. Diamantdraht (1) zum Schneiden von steinartigem Material, wobei der Diamantdraht aufweist: ein Tragseil (2), das in einer geschlossenen Schleife angeordnet ist; eine Reihen von Schleifperlen (3), die auf dem Tragseil (2) in Abständen hintereinander angebracht sind; und einen äußeren rohförmigen Mantel (4) aus Kunststoffmaterial, der durch Spritzgießen unmittelbar über dem Tragseil (2) gebildet wird, so dass das Tragseil (2) bedeckt ist und zwischen dem Tragseil (2) und den einzelnen Schleifperlen (3) liegt, um die Schleifperlen (3) auf dem Tragseil (2) zu fixieren;
wobei das Tragseil (2) eine Vielzahl von Strängen (6) aufweist und durch Verflechten der Stränge (6) zu einer Schleife geschlossen wird, um eine Reihe von Diskontinuitätspunkten (P) zu bilden, an denen die zwei Enden jedes Strangs (6) angeordnet sind/anliegen;
wobei die Schleifperlen (3) paarweise entlang des Tragseils (2) eine Reihe von freigelegten Längsausdehnungen (5) begrenzen; und wobei mindestens einer der Diskontinuitätspunkte (P) des Tragseils (2) entlang einer der freigelegten Längsausdehnungen (5) angeordnet ist, und zwar beabstandet von den zwei Schleifperlen (3), welche die gleiche freigelegte Längsausdehnung (5) begrenzen; wobei der Diamantdraht (1) **dadurch gekennzeichnet ist, dass** der äußere rohrförmige Mantel (4) entlang der freigelegten Längsausdehnung (5), die den Diskontinuitätspunkt (P) aufnimmt, ein vergrößertes Mantelsegment (10) aufweist, das eine festgelegte axiale Länge (ℓ) aufweist und sich über den gleichen Diskontinuitätspunkts (P) erstreckt und ferner von den zwei Schleifperlen (3) beabstandet/distanziert ist, welche die freigelegte Längsausdehnung (5) begrenzen.

11. Diamantdraht nach Anspruch 10, **dadurch gekennzeichnet, dass** sämtliche Diskontinuitätspunkt (P) des Tragseils (2) entlang ebenso vielen freigelegten Längsausdehnung (5) des Tragseils (2) angeordnet, und zwar von den zwei Schleifperlen (3) beabstandet, welche die entsprechende freigelegte Längsausdehnung (5) begrenzen, und dass der äußere rohrförmige Mantel (4) entlang jeder freigelegten Längsausdehnung (5), die einen Diskontinuitätspunkt (P) des Tragseils (2) aufnimmt, ein entsprechendes vergrößertes Segment (10) aufweist, dass sich über den Diskontinuitätspunkt (P) erstreckt und ferner von den zwei Schleifperlen (3) beabstandet/distanziert ist, welche die gleiche freigelegte Längsausdehnung (5) begrenzen.

12. Diamantendraht nach Anspruch 10 oder 11, **dadurch gekennzeichnet, dass** das vergrößerte Segment (10) im Wesentlichen äquidistant zu den zwei Schleifperlen (3) ist, die sich an den zwei Enden der freigelegten Längsausdehnung (5) befinden, die den Diskontinuitätspunkt (P) des Tragseils (2) aufnimmt.

13. Diamantendraht nach Anspruch 10, 11 oder 12, **dadurch gekennzeichnet, dass** das vergrößerte Segment (10) im Wesentlichen zylinderförmig ist.

14. Diamantendraht nach Anspruch 13, **dadurch gekennzeichnet, dass** das vergrößerte Segment (10) einen maximalen Außendurchmesser (dₘₐₓ) aufweist, der kleiner als oder gleich dem Außendurchmesser (dₑ) der unmittelbar benachbarten Schleifperlen (3) ist.

15. Diamantendraht nach einem der Ansprüche 10 bis 14, **dadurch gekennzeichnet, dass** das vergrößerte Segment (10) eine axiale Länge (ℓ) aufweist, die größer als 50 % des Werts des Durchmessers des Tragseils (2) ist und/oder 5-mal kleiner ist als der Wert des Durchmessers des Tragseils (2).

16. Diamantendraht nach einem der Ansprüche 10 bis 15, **dadurch gekennzeichnet, dass** der äußere rohförmige Mantel (4) ein vergrößertes Segment (10) entlang jeder freigelegten Längsausdehnung (5) des Tragseils (2) aufweist, so dass sämtliche Schleifperlen (3) auf beiden Seiten durch ein vergrößertes Mantelsegment (10) flankiert sind.

## Revendications

1. Procédé de production d'un fil diamanté (1) pour couper un matériau pierreux, dans lequel le fil diamanté (1) comprend : un câble porteur (2) ayant une structure à multiples brins ; une série de billes abrasives (3) ajustées sur ledit câble porteur (2) espacées l'une de l'autre ; et une gaine tubulaire extérieure (4) constituée de matière plastique, qui recouvre sensiblement complètement le câble porteur (2) et verrouille fermement les billes abrasives (3) uniques sur le câble porteur (2) ;
le procédé de production comprenant les étapes de :
- enfilage d'un nombre prédéterminé de billes abrasives (3) sur le câble porteur (2) ;
- jonction des deux extrémités (2a) du câble porteur (2) par l'entrelacement de manière appropriée des brins (6) formant le câble porteur (2), de manière à former une boucle fermée ; et
- répartition des billes diamantées (3) sur le câble porteur (2) de sorte qu'au moins une partie des billes abrasives (3) délimitent, par paires sur une portion correspondante du câble porteur (2), une série d'étirements longitudinaux découverts (5), et de sorte qu'au moins l'un des points de discontinuité (P) du câble porteur (2) soit agencé le long de l'un desdits étirements longitudinaux découverts (5) du câble porteur (2), espacé des deux billes abrasives (3) qui délimitent le même étirement longitudinal découvert (5) ;
**caractérisé par**
- le moulage par injection de la gaine tubulaire extérieure (4) constituée de matière plastique directement sur ladite portion du câble porteur (2), de manière à recouvrir la même portion du câble porteur (2) et également former, au moins le long de chaque étirement longitudinal découvert (5) qui accueille un point de discontinuité (P) respectif du câble porteur (2), un segment de gaine élargi (10) respectif ayant une longueur axiale (ℓ) donnée et qui s'étend à cheval sur le point de discontinuité (P) et est espacé/distancé des deux billes abrasives (3) situées aux deux extrémités du même étirement longitudinal découvert (5).

2. Procédé de production selon la revendication 1, **caractérisé en ce que** ledit segment de gaine élargi (10) est sensiblement équidistant des deux billes abrasives (3) situées aux deux extrémités de l'étirement longitudinal découvert (5) accueillant le point de discontinuité (P) du câble porteur (2).

3. Procédé de production selon la revendication 1 ou 2, **caractérisé en ce que** le segment de gaine élargi (10) est de forme sensiblement cylindrique.

4. Procédé de production selon la revendication 3, **caractérisé en ce que** le segment de gaine élargi (10) a un diamètre extérieur maximal (dₘₐₓ) inférieur ou égal au diamètre extérieur (dₑ) des billes abrasives (3) immédiatement adjacentes.

5. Procédé de production selon l'une quelconque des revendications précédentes, **caractérisé en ce que** le segment de gaine élargi (10) a une longueur axiale (ℓ) supérieure à 50 % de la valeur du diamètre du câble porteur (2), et/ou 5 fois moins que la valeur du diamètre du câble porteur (2).

6. Procédé de production selon l'une quelconque des revendications précédentes, **caractérisé en ce que** les billes abrasives (3) sont agencées sur ladite portion du câble porteur (2) à une distance sensiblement constante l'une de l'autre.

7. Procédé de production selon l'une quelconque des revendications précédentes, **caractérisé en ce qu'**il comprend, avant l'étape de la répartition des billes diamantées (3) sur le câble porteur (2), également l'étape consistant à tendre la portion du câble porteur (2) où la gaine tubulaire extérieure (4) doit être moulée par injection.

8. Procédé de production selon l'une quelconque des revendications précédentes, **caractérisé par** la formation, au cours du moulage par injection de la gaine tubulaire extérieure (4), d'un segment de gaine élargi (10) le long de chaque étirement longitudinal découvert (5) du câble porteur (2), de sorte que toutes les billes abrasives (3) soient flanquées de part et d'autre d'un segment de gaine élargi (10).

9. Procédé de production selon l'une quelconque des revendications précédentes, **caractérisé en ce que** la gaine tubulaire extérieure (4) est constituée d'un polymère thermoplastique.

10. Fil diamanté (1) pour couper un matériau pierreux et comprenant : un câble porteur (2) agencé dans une boucle fermée ; une série de billes abrasives (3) qui sont montées sur le câble porteur (2) en étant espacées les unes des autres ; et une gaine tubulaire extérieure (4) constituée de matière plastique, qui est formée par moulage par injection directement sur le câble porteur (2) de manière à recouvrir le câble porteur (2) et à s'interposer entre le câble porteur (2) et les billes abrasives (3) uniques pour verrouiller fermement les billes abrasives (3) sur le câble porteur (2) ;
le câble porteur (2) comprenant une pluralité de brins (6), et étant fermé dans une boucle par l'entrelacement desdits brins (6) de manière à former une série de points de discontinuité (P) où les deux extrémités de chaque brin (6) sont agencées/aboutées ;
dans lequel les billes abrasives (3) délimitent, par paires le long du câble porteur (2), une série d'étirements longitudinaux découverts (5) ; et
au moins l'un des points de discontinuité (P) du câble porteur (2) est agencé le long de l'un desdits étirements longitudinaux découverts (5), espacé des deux billes abrasives (3) délimitant le même étirement longitudinal découvert (5) ;
le fil diamanté (1) étant **caractérisé en ce que** la gaine tubulaire extérieure (4) a, le long de l'étirement longitudinal découvert (5) qui accueille ledit point de discontinuité (P), un segment de gaine élargi (10) ayant une longueur axiale (ℓ) fixe et qui s'étend à cheval sur le même point de discontinuité (P) et est en outre espacé/distancé des deux billes abrasives (3) délimitant l'étirement longitudinal découvert (5).

11. Fil diamanté selon la revendication 10, **caractérisé en ce que** tous les points de discontinuité (P) du câble porteur (2) sont agencés le long du même nombre d'étirements longitudinaux découverts (5) du câble porteur (2), espacés des deux billes abrasives (3) délimitant l'étirement longitudinal découvert (5) correspondant ; et **en ce que** la gaine tubulaire extérieure (4) a, le long de chaque étirement longitudinal découvert (5) accueillant un point de discontinuité (P) du câble porteur (2), un segment élargi (10) respectif qui s'étend à cheval sur le point de discontinuité (P) et est en outre espacé/distancé des deux billes abrasives (3) délimitant le même étirement longitudinal découvert (5).

12. Fil diamanté selon la revendication 10 ou 11, **caractérisé en ce que** le segment élargi (10) est sensiblement équidistant des deux billes abrasives (3) qui sont situées aux deux extrémités de l'étirement longitudinal découvert (5) accueillant le point de discontinuité (P) du câble porteur (2).

13. Fil diamanté selon la revendication 10, 11 ou 12, **caractérisé en ce que** le segment élargi (10) est de forme sensiblement cylindrique.

14. Fil diamanté selon la revendication 13, **caractérisé en ce que** le segment élargi (10) a un diamètre extérieur maximal (dₘₐₓ) inférieur ou égal au diamètre extérieur (dₑ) des billes abrasives (3) immédiatement adjacentes.

15. Fil diamanté selon l'une quelconque des revendications 10 à 14, **caractérisé en ce que** le segment élargi (10) a une longueur axiale (ℓ) supérieure à 50 % de la valeur du diamètre du câble porteur (2), et/ou inférieure à 5 fois la valeur du diamètre du câble porteur (2).

16. Fil diamanté selon l'une quelconque des revendications 10 à 15, **caractérisé en ce que** la gaine tubulaire extérieure (4) a un segment élargi (10) le long de chaque étirement longitudinal découvert (5) du câble porteur (2), de sorte que toutes les billes abrasives (3) soient flanquées, de part et d'autre, d'un segment élargi (10) .
